# EUROPÄISCHE PATENTSCHRIFT

(11) **EP 3 520 888 B1**
(45) Veröffentlichungstag und Bekanntmachung des Hinweises auf die Patenterteilung: **13.04.2022**
(21) Anmeldenummer: 19152200.2
(22) Anmeldetag: 17.01.2019
(51) Int. Cl.: B01F 5/04, B01F 5/06, B01F 3/04, F01N 3/20, F01N 3/28

(54) **MISCHER**
MIXER
MÉLANGEUR

(30) Priorität: 22.01.2018 DE 102018101253
(43) Veröffentlichungstag der Anmeldung: 07.08.2019
(73) Patentinhaber: Purem GmbH, 66539 Neunkirchen (DE)
(72) Erfinder: Kurpejovic, Enver, 73230 Kirchheim unter Teck (DE); Vempati, Krishna Kumar, 73730 Esslingen (DE); Solipuram, Vijaya Bhaskar, 73730 Esslingen (DE)
(74) Vertreter: Ruttensperger Lachnit Trossin Gomoll

(56) Entgegenhaltungen:
- DE-A1-102016 117 900
- DE-T5-112011 103 501
- US-A1- 2010 005 790

## Beschreibung

Die vorliegende Erfindung betrifft einen Mischer zur Durchmischung von in einem Abgasführungskanal einer Brennkraftmaschine strömendem Abgas mit in den Abgasführungskanal eingespritztem Reaktionsmittel gemäß dem Oberbegriff des Anspruchs 1.

Aus der DE 10 2016 104 361 A1 ist ein Mischer bekannt, bei welchem von einem an den Reaktionsmittelaufnahmekanal anschließenden Übergangsbereich zwei im Wesentlichen in entgegengesetzten Richtungen von dem Übergangsbereich weg führende und mit dem Reaktionsmittelaufnahmekanal eine zu einer Reaktionsmittelaufnahmekanal-Längsachse symmetrische, T-förmige Struktur bildende Abgabekanäle abzweigen.

Ein Mischer gemäß dem Oberbegriff des Anspruchs 1 ist aus der DE 10 2011 103 501 T5 bekannt. Bei diesem Mischer ist zwischen zwei plattenartigen Mischerkörperteilen ein auch einen Reaktionsmittelaufnahmekanal bereitstellender, spiralartiger Strömungsraum gebildet.

Es ist die Aufgabe der vorliegenden Erfindung, einen Mischer bereitzustellen, mit welchem eine verbesserte Durchmischung von Reaktionsmittel und Abgas erreicht werden kann.

Erfindungsgemäß wird diese Aufgabe gelöst durch einen Mischer zur Durchmischung von in einem Abgasführungskanal einer Brennkraftmaschine strömendem Abgas mit in den Abgasführungskanal eingespritztem Reaktionsmittel gemäß Anspruch 1. Dieser Mischer umfasst einen Mischerkörper mit einem Reaktionsmittelaufnahmekanal sowie eine in einem Übergangsbereich an den Reaktionsmittelaufnahmekanal anschließende und von diesem weg führende Abgabeanordnung mit einem Abgabekanal, wobei die Abgabeanordnung bezüglich einer Reaktionsmittelaufnahmekanal-Längsachse nicht symmetrisch ausgebildet ist. Durch die unsymmetrische Ausgestaltung der das Reaktionsmittel bzw. das Abgas im Mischerkörper führenden Kanäle wird eine zu einer verbesserten Durchmischung führende Strömungsführung insbesondere auch bei der Abgabe eines Gemisches aus Reaktionsmittel und Abgas aus der Abgabeanordnung in den dann folgenden Bereich eines Abgasführungskanals erreicht.

Eine derartige unsymmetrische Ausgestaltung kann in einfacher und auch zu einer kompakten Bauart führender Weise dadurch erreicht werden, dass in dem Übergangsbereich ein einziger Abgabekanal an den Reaktionsmittelaufnahmekanal anschließt.

Um insbesondere im Übergangsbereich zwischen dem Reaktionsmittelaufnahmekanal und dem an diesen anschließenden Abgabekanal durch die in diesem Übergangsbereich erfolgende Umlenkung eine effiziente Durchmischung zu unterstützen, ist weiter vorgesehen, dass der Reaktionsmittelaufnahmekanal sich entlang einer Reaktionsmittelaufnahmekanal-Längsachse im Wesentlichen geradlinig erstreckt und der Abgabekanal sich entlang einer Abgabekanal-Längsachse im Wesentlichen geradlinig erstreckt.

Ferner wird erfindungsgemäß eine verbesserte Vermischung von Reaktionsmittel und Abgas dadurch unterstützt, dass zwischen einer Reaktionsmittelaufnahmekanal-Längsachse und einer Abgabekanal-Längsachse ein Winkel von weniger als 90°, vorzugsweise im Bereich zwischen 30° und 70°, gebildet ist. Somit wird eine Umlenkung im Übergangsbereich um mehr als 90° erzwungen, was zu einer vergleichsweise starken Verwirbelung und somit einer effizienten Durchmischung des Abgases mit Reaktionsmittel führt.

Zum Einleiten von Abgas in den Mischerkörper wird vorgeschlagen, dass eine Abgaseintrittsöffnungsanordnung eine Mehrzahl von zu dem Reaktionsmittelaufnahmekanal oder/und zu dem Abgabekanal führenden Abgaseintrittsöffnungen umfasst.

Um dabei auch eine Abgasströmung in einer Richtung, in welcher Reaktionsmittel in den Reaktionsmittelaufnahmekanal eingespritzt wird, zu erreichen, wird vorgeschlagen, dass die Abgaseintrittsöffnungsanordnung wenigstens eine in einem stromaufwärtigen Endbereich des Reaktionsmittelaufnahmekanals angeordnete, in Richtung einer Reaktionsmittelaufnahmekanal-Längsachse langgestreckte Abgaseintrittsöffnung umfasst.

Ferner kann für eine effiziente Vermischung von Abgas mit Reaktionsmittel vorgesehen sein, dass die Abgaseintrittsöffnungsanordnung wenigstens eine zu dem Übergangsbereich führende Abgaseintrittsöffnung umfasst, oder/und dass die Abgaseintrittsöffnungsanordnung wenigstens eine zu dem Abgabekanal führende Abgaseintrittsöffnung umfasst.

Für den Austritt eines Gemisches aus Reaktionsmittel und Abgas aus dem Mischerkörper kann eine Austrittsöffnungsanordnung wenigstens eine aus dem Abgabekanal heraus führende Austrittsöffnung umfassen.

Dabei kann ein vergleichsweise großer Anteil des Gemisches aus Abgas und Reaktionsmittel durch eine Haupt-Austrittsöffnung der Austrittsöffnungsanordnung abgegeben werden, wobei der Abgabekanal an einem stromabwärtigen Endbereich des Abgabekanals über die Haupt-Austrittsöffnung in Richtung einer Abgabekanal-Längsachse offen ist.

Weiter kann für den Austritt von Abgas bzw. Reaktionsmittel aus dem Mischerkörper die Austrittsöffnungsanordnung im Erstreckungsbereich des Abgabekanals wenigstens eine, vorzugsweise eine Mehrzahl von aus dem Abgabekanal heraus führenden Neben-Austrittsöffnungen umfassen.

Der Mischkörper umfasst ein plattenartiges erstes Mischerkörperteil und ein plattenartiges zweites Mischerkörperteil, wobei zwischen dem ersten Mischerkörperteil und dem zweiten Mischerkörperteil der Reaktionsmittelaufnahmekanal und der Abgabekanal gebildet sind. Die beiden Mischerkörperteil sind dabei vorzugsweise als Blechumformteile ausgebildet Zum Bereitstellen der Strömungsvolumina für das Abgas bzw. das in den Abgasstrom eingespritzte Reaktionsmittel können im ersten Mischerkörperteil ein erster Auswölbungsbereich und im zweiten Mischerkörperteil ein zweiter Auswölbungsbereich gebildet sein, wobei der erste Auswölbungsbereich und der zweite Auswölbungsbereich im Wesentlichen den Reaktionsmittelaufnahmekanal begrenzen. Ferner kann im zweiten Mischerkörperteil ein den Abgabekanal begrenzender dritter Auswölbungsbereich gebildet sein.

Um im Übergangsbereich einerseits eine definierte Strömungsumlenkung, andererseits auch eine effiziente Durchmischung von Abgas und Reaktionsmittel herbeizuführen, wird vorgeschlagen, dass der Übergangsbereich eine zwischen dem zweiten Auswölbungsbereich und dem dritten Auswölbungsbereich am zweiten Mischerkörperteil gebildete Einformung umfasst.

Zum Erhalt der nicht symmetrischen Ausgestaltung der verschiedenen Abgas bzw. Reaktionsmittel führenden Kanäle im Mischerkörper kann bei einer vorteilhaften Ausgestaltung vorgesehen sein, dass das erste Mischerkörperteil und das zweite Mischerkörperteil eine wenigstens Bereichsweise an eine Kreisform angenäherte Umfangskontur aufweisen, und dass eine Reaktionsmittelaufnahmekanal-Längsachse und eine Abgabekanal-Längsachse bezüglich eines Zentrumbereichs der Kreisform sich nicht radial erstrecken.

Das erste Mischerkörperteil und das zweite Mischerkörperteil können in einem Außenumfangsbereich miteinander verbunden sein.

Die vorliegende Erfindung betrifft ferner eine Abgasanlage für eine Brennkraftmaschine, umfassend einen Abgasführungskanal, einen Mischer mit erfindungsgemäßem Aufbau und eine Reaktionsmitteleinspritzanordnung zum Einspritzen von Reaktionsmittel in den Reaktionsmittelaufnahmekanal des Mischers.

Dabei ist für eine definierte Abgabe des Reaktionsmittels in den Reaktionsmittelaufnahmekanal vorzugsweise die Reaktionsmitteleinspritzanordnung sich in den Reaktionsmittelaufnahmekanal erstreckend angeordnet.

Die vorliegende Erfindung wird nachfolgend mit Bezug auf die beiliegenden Figuren detailliert beschrieben. Es zeigt:
- Fig. 1: einen Teil einer Abgasanlage einer Brennkraftmaschine mit einem in einem Abgasführungskanal angeordneten Mischer;
- Fig. 2: eine Seitenansicht des in Fig. 1 dargestellten Mischers
- Fig. 3: eine Seitenansicht des Mischers der Fig. 1 in Blickrichtung III in Fig. 2;
- Fig. 4: eine Ansicht des Mischers der Fig. 1 in Blickrichtung IV in Fig. 2;
- Fig. 5: eine Ansicht des Mischers der Fig. 1 in Blickrichtung V in Fig. 2;

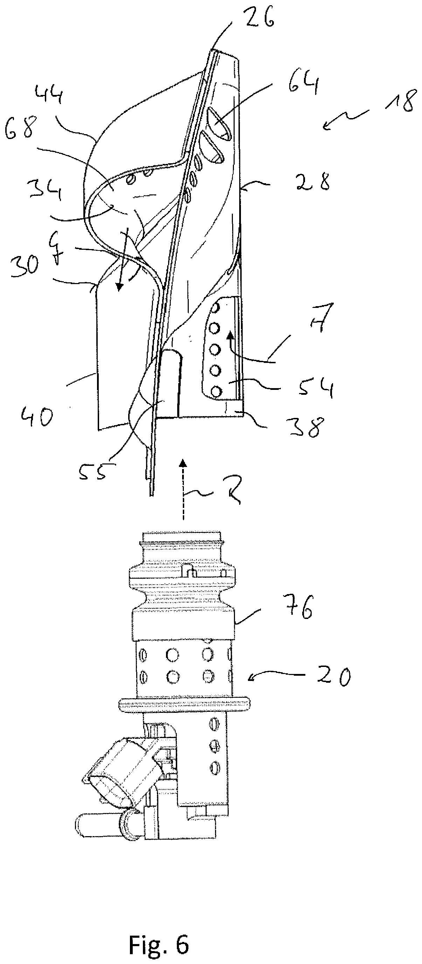

- Fig. 6: eine der Fig. 2 entsprechende Seitenansicht des Mischers der Fig. 1 mit einer in diesen einzusetzenden Reaktionsmittelabgabeanordnung.

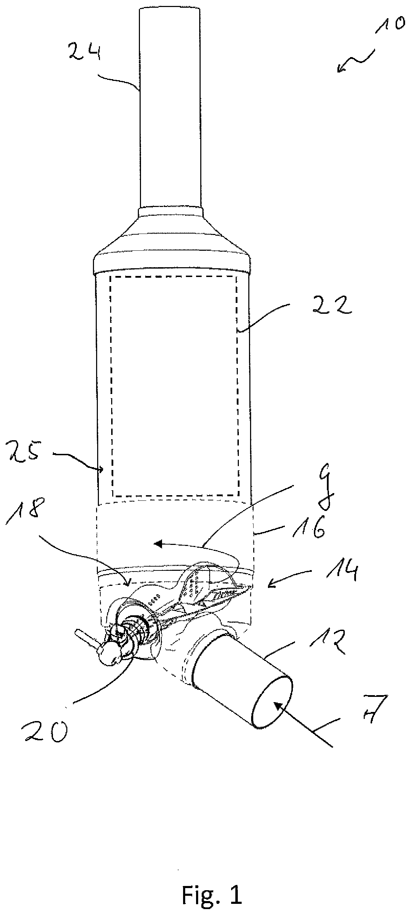

Die Fig. 1 zeigt einen Teil einer allgemein mit 10 bezeichneten Abgasanlage einer Brennkraftmaschine. Über ein stromaufwärtiges Rohr 12 wird Abgas A in eine allgemein mit 14 bezeichnete Mischstrecke eingeleitet. Die Mischstrecke 14 ist in einem im Allgemeinen mit 16 bezeichneten Gehäuse angeordnet und umfasst einen Mischer 18, in welchem über eine Reaktionsmittelabgabeanordnung 20, im Allgemeinen als Injektor bezeichnet, Reaktionsmittel eingespritzt wird. Das im Mischer 18 gebildete Gemisch G aus Abgas A und Reaktionsmittel R verlässt den Mischer 18 und tritt in das Innere des Gehäuses 16 ein, in welchem in einem stromabwärts dann folgenden Bereich eine allgemein mit 22 bezeichnete Abgasbehandlungsanordnung, beispielsweise umfassend eine Katalysatoranordnung für eine selektive katalytische Reduktion sowie eine Partikelfilteranordnung, vorgesehen sein kann. Über ein stromabwärtiges Rohr 24 verlässt das behandelte und schadstoffentreicherte Abgas das Gehäuse 16 und kann beispielsweise über eine oder mehrere Schalldämpferanordnungen oder noch weitere Abgasbehandlungsanodnungen zur Umgebung hin ausgestoßen werden . Die Rohre 12, 24 und das Gehäuse 16 bilden im Wesentlichen einen Abgasführungskanal 25.

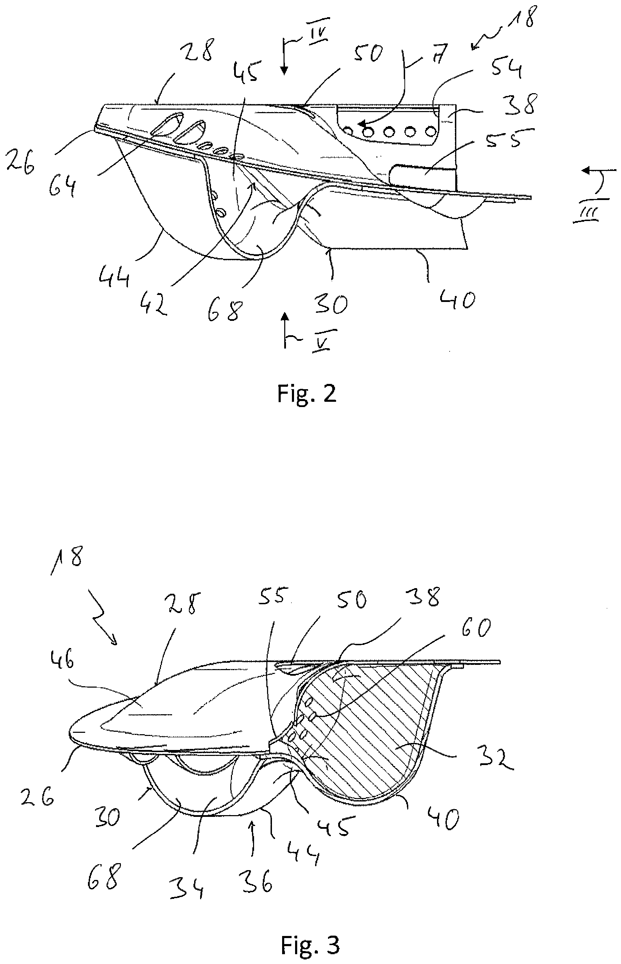

Der im Allgemeinen auch als Tunnel-Mischer bezeichnete Mischer 18 ist in den Fig. 2 bis 5 detailliert dargestellt. Der Mischer 18 umfasst einen Mischerkörper 26, der im Wesentlichen aus zwei vorzugsweise aus Blechmaterial aufgebauten bzw. geformten Mischerkörperteilen 28, 30 aufgebaut ist. Das in Richtung stromaufwärts orientiert zu positionierende erste Mischerkörperteil 28 und das in Richtung stromabwärts orientiert zu positionierende zweite Mischerkörperteil 30 begrenzen zusammen einen Reaktionsmittelaufnahmekanal 32 und einen Abgabekanal 34 einer allgemein mit 36 bezeichneten Abgabeanordnung.

Zum Bereitstellen des Reaktionsmittelaufnahmekanals 32 weist das plattenartig ausgebildete erste Mischerkörperteil 28 eine erste Auswölbung 38 auf. Dieser zugeordnet ist eine zweite Auswölbung 40 am zweiten Mischerkörperteil 30 vorgesehen. Die beiden Auswölbungen 38, 40 begrenzen zusammen den in Richtung einer Reaktionsmittelaufnahmekanal-Längsachse L_{R} langgestreckten und im Wesentlichen geradlinig sich erstreckenden Reaktionsmittelaufnahmekanal 32.

In einem allgemein mit 42 bezeichneten Übergangsbereich geht der Reaktionsmittelaufnahmekanal 32 in den Abgabekanal 34 der Abgabeanordnung 36 über, welcher im Wesentlichen in Richtung einer Abgabekanal-Längsachse L_{A} langgestreckt und im Wesentlichen geradlinig sich erstreckend ausgebildet ist und vom Übergangsbereich 42 wegführt. Der Abgabekanal 34 ist im Wesentlichen durch eine dritte Auswölbung 44 des zweiten Mischerkörperteils 44 und einem dieser Auswölbung 44 gegenüberliegenden, ebenfalls wölbungsartigen Bereich 46 des ersten Mischerkörperteils 28 begrenzt. Im Übergangsbereich 42 weist das zweite Mischerkörperteil 30 eine zwischen den Auswölbungen 40, 44 desselben gebildete Einformung 45 auf, an welcher der entlang des Reaktionsmittelaufnahmekanals 32 strömende Strom aus Abgas A und Reaktionsmittel R in den Abgabekanal 34 umgelenkt wird.

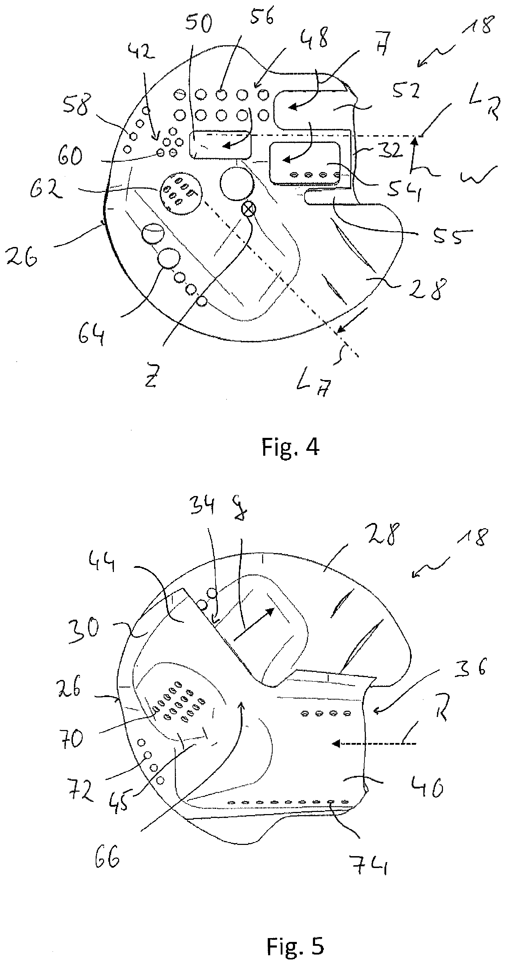

Die Fig. 4 zeigt, dass ein zwischen den Reaktionsmittelaufnahmekanal 30 und dem Abgabekanal 34 bzw. den Längsachsen L_{R} und L_{A} derselben gebildeter Winkel W ein spitzer Winkel, also ein Winkel kleiner als 90° ist. Dies bedeutet, dass im Übergangsbereich 44 eine vergleichsweise starke Umlenkung des den Reaktionsmittelaufnahmekanal 32 verlassenden und bereits mit Reaktionsmittel durchsetzten Stroms von Abgas erreicht wird.

Um den Eintritt von Abgas A in das im Mischerkörper 26 gebildete Volumen, insbesondere den Reaktionsmittelaufnahmekanal 32, zu ermöglichen, ist eine allgemein mit 48 bezeichnete Abgaseintrittsöffnungsanordnung vorgesehen. Diese umfasst am stromaufwärts, also dem heranströmenden Abgas A ausgesetzt zu positionierenden ersten Mischerkörperteil 28 mehrere in Richtung der Reaktionsmittelaufnahmekanal-Längsrichtung L_{R} langgestreckte Abgaseintrittsöffnungen 50, 52, 54, 55. Dabei können beispielsweise die beiden Abgaseintrittsöffnungen 52, 54, 55 am stromaufwärtigen Endbereich des Reaktionsmittelaufnahmekanals 32 angeordnet sein bzw. beginnen, während die Abgaseintrittsöffnung 50 am stromabwärtigen Endbereich des Reaktionsmittelaufnahmekanals 32 angeordnet sein kann bzw. enden kann. Die in der Reaktionsmittelaufnahmekanal-Längsrichtung L_{R} langgestreckten Abgaseintrittsöffnungen 50, 52, 54, 55 ermöglichen eine Umlenkung des in den Reaktionsmittelaufnahmekanal 32 eingeleiteten Abgases A in Richtung der Reaktionsmittelaufnahmekanal-Längsrichtung R bzw. in einer Richtung, welche auch einer Haupt-Reaktionsmittelabgaberichtung des aus der Reaktionsmittelabgabeanordnung 20 abgegebenen Reaktionsmittels R im Reaktionsmittelaufnahmekanal 32 entspricht. Es sei darauf hingewiesen, dass im Allgemein das Reaktionsmittel R in Form eines Sprühkegels abgegeben wird und die Haupt-Abgaberichtung beispielsweise einer Zentralachse eines derartigen Sprühkegels entsprechen kann.

Das über die Abgaseintrittsöffnungen 50, 52, 54, 55 eingeleitete Abgas A strömt zusammen mit dem aus der Reaktionsmittelabgabeanordnung 20 abgegebenen Reaktionsmittel R in Richtung auf den Übergangsbereich 42 zu, so dass in diesem Strömungsbereich bereits eine Durchmischung von Abgas A und Reaktionsmittel R entstehen kann. Dies kann durch weitere, beispielsweise mit kreisförmigem Querschnitt ausgebildete Abgaseintrittsöffnungen 56 im Bereich des Reaktionsmittelaufnahmekanals 32, durch entsprechend geformte Abgaseintrittsöffnungen 58, 60 im Übergangsbereich 42 und durch mehrere im Bereich des Abgabekanals 34 vorgesehene Abgaseintrittsöffnungen 62, 64 unterstützt werden. Durch die im Wesentlichen über den gesamten Strömungsbereich im Mischerkörper 26 vorgesehenen bzw. verteilten Öffnungen der Abgaseintrittsöffnungsanordnung 48 und auch die unterschiedlichen Größen bzw. Formgebungen dieser Öffnungen wird eine effiziente Durchmischung des in verschiedenen Bereichen eintretenden Abgases A mit dem Reaktionsmittel R zur Bereitstellung des den Mischerkörper 26 verlassenden Gemisches G aus Abgas und Reaktionsmittel erreicht.

Um den Austritt des Gemisches G aus dem im Mischerkörper 26 gebildeten Strömungsvolumen zu ermöglichen, ist eine allgemein mit 66 bezeichnete Austrittsöffnungsanordnung vorgesehen. Diese umfasst am stromabwärtigen Ende des Abgabekanals 34 eine Haupt-Austrittsöffnung 68, durch welche ein Großteil des in Richtung der Abgabekanal-Längsachse L_{A} strömenden Gemisches G aus dem Mischerkörper 26 austritt. Im zweiten Mischerkörperteil 30 sind beispielsweise im dritten Auswölbungsbereich 44 Nebenaustrittsöffnungen 70 vorgesehen. Gleichermaßen können am Übergangsbereich 42 Neben-Austrittsöffnungen 72 vorgesehen sein. Auch im Bereich des Reaktionsmittelaufnahmekanals 32, beispielsweise im Bereich der ersten Auswölbung 40, können Neben-Austrittsöffnungen 74 der Austrittsöffnungsanordnung 66 vorgesehen sein.

Man erkennt insbesondere in den Fig. 4 und 5, dass der Mischerkörper 26 bzw. die beiden Mischerkörperteile 28, 30 desselben in Draufsicht eine in großen Bereichen näherungsweise kreisartige Umfangskontur aufweisen. Bezüglich eines fiktiven Zentralbereichs Z dieser allgemein kreisartigen Umfangskontur sind der Reaktionsmittelaufnahmekanal 32 und der einzige Abgabekanal 34 der Abgabeanordnung 36 so angeordnet, dass die jeweiligen Längsachsen L_{R} und L_{A} sich bezüglich dieses Zentralbereichs Z nicht radial erstrecken. Die beiden Kanäle 32, 34 bilden somit eine allgemein V-artige Konfiguration, bei welcher die Abgabeanordnung 36 mit deren einzigem Abgabekanal 34 bezüglich der Längsachse L_{R} des Reaktionsmittelaufnahmekanals 32 eine grundsätzlich nicht symmetrische, sondern nur zu einer Seite wegführende Struktur aufweist. Die beiden Kanäle 32, 34 sind somit bezüglich des Zentralbereichs Z des Mischerkörpers 26 jeweils exzentrisch, also in Richtung zum Außenrandbereichs des Mischerkörpers 26 hin versetzt, so dass aufgrund dieser allgemein unsymmetrischen, V-förmigen Anordnung der Kanäle 32, 34 der insbesondere im Bereich der Haupt-Austrittsöffnungen 68 austretende Anteil des Gemisches G in der in Fig. 1 angedeuteten Zirkularströmung in der Mischstrecke 14 in das Gehäuse 16 eintritt. Auch dies unterstützt die Durchmischung des Abgases mit dem in dieses eingespritzten Reaktionsmittel. Diese zu einer verstärkten Verwirbelung des in das Gehäuse 16 eintretenden Gemischstroms führende Strömungsführung wird unterstützt durch die verschiedenen im zweiten Mischerkörperteil 30 vorgesehenen Neben-Austrittsöffnungen 70, 72, 74, deren Formgebung, Größe und Positionierung zum Erzeugen einer derartigen effizienten Strömungsdurchmischung ausgewählt werden können.

Abschließend sei darauf hingewiesen, dass selbstverständlich die beiden Mischerkörperteile 28, 30 zum Bilden einer stabilen Struktur in ihrem Außenumfangsbereich miteinander beispielsweise durch Verschweißung oder Verlötung fest verbunden sein können. Der Reaktionsmittelaufnahmekanal 32 ist derart dimensioniert, dass er den in diesen einzusetzenden Bereich 76 der Reaktionsmittelabgabeanordnung 20 aufnehmen kann, so dass die Reaktionsmittelabgabe aus einem Düsenbereich der Reaktionsmittelabgabeanordnung 20 im Inneren des Reaktionsmittelabgabekanals 32 erfolgen kann. Der Mischerkörper 26 kann in dem Gehäuse 16 in dem Bereich der Mischstrecke 14 grundsätzlich so angeordnet sein, dass er einerseits bezüglich des heranströmenden Abgasstroms und andererseits bezüglich einer Längsmittenachse des Gehäuses 16 geneigt angeordnet ist, um eine definierte Strömungsführung und insbesondere auch die aus dem Mischerkörper 26 austretende Zirkularströmung zu unterstützt.

## Patentansprüche

1. Mischer zur Durchmischung von in einem Abgasführungskanal einer Brennkraftmaschine strömendem Abgas (A) mit in den Abgasführungskanal eingespritztem Reaktionsmittel (R), umfassend einen Mischerkörper (26) mit einem Reaktionsmittelaufnahmekanal (32) sowie eine in einem Übergangsbereich (42) an den Reaktionsmittelaufnahmekanal (32) anschließende und von diesem wegführende Abgabeanordnung (36) mit einem Abgabekanal (34), wobei der Mischerkörper (26) ein plattenartiges erstes Mischerkörperteil (28) und ein plattenartiges zweites Mischerkörperteil (30) umfasst, wobei zwischen dem ersten Mischerkörperteil (28) und dem zweiten Mischerkörperteil (30) der Reaktionsmittelaufnahmekanal (32) und der Abgabekanal (34) gebildet sind, wobei die Abgabeanordnung (36) bezüglich einer Reaktionsmittelaufnahmekanal-Längsachse (L_{R}) nicht symmetrisch ausgebildet ist, **dadurch gekennzeichnet, dass** der Reaktionsmittelaufnahmekanal (32) sich entlang einer Reaktionsmittelaufnahmekanal-Längsachse (L_{R}) geradlinig erstreckt und der Abgabekanal (34) sich entlang einer Abgabekanal-Längsachse (L_{A}) geradlinig erstreckt, und dass zwischen einer Reaktionsmittelaufnahmekanal-Längsachse (L_{R}) und einer Abgabekanal-Längsachse (L_{A}) ein Winkel (W) von weniger als 90° gebildet ist.

2. Mischer nach Anspruch 1, **dadurch gekennzeichnet, dass** in dem Übergangsbereich (42) ein einziger Abgabekanal (34) an den Reaktionsmittelaufnahmekanal (32) anschließt.

3. Mischer nach Anspruch 1 oder 2, **dadurch gekennzeichnet**, zwischen einer Reaktionsmittelaufnahmekanal-Längsachse (L_{R}) und einer Abgabekanal-Längsachse (L_{A}) ein Winkel (W) im Bereich zwischen 30° und 70° gebildet ist.

4. Mischer nach Anspruch 1, 2 oder 3, **dadurch gekennzeichnet, dass** eine Abgaseintrittsöffnungsanordnung (48) eine Mehrzahl von zu dem Reaktionsmittelaufnahmekanal (32) oder/und zu dem Abgabekanal (34) führenden Abgaseintrittsöffnungen (50, 52, 54, 55, 56, 58, 60, 62, 64) umfasst.

5. Mischer nach Anspruch 4, **dadurch gekennzeichnet, dass** die Abgaseintrittsöffnungsanordnung (48) wenigstens eine in einem stromaufwärtigen Endbereich des Reaktionsmittelaufnahmekanals (32) angeordnete, in Richtung einer Reaktionsmittelaufnahmekanal-Längsachse (L_{R}) langgestreckte Abgaseintrittsöffnung (52, 54, 55) umfasst.

6. Mischer nach Anspruch 4 oder 5, **dadurch gekennzeichnet, dass** die Abgaseintrittsöffnungsanordnung (48) wenigstens eine zu dem Übergangsbereich (42) führende Abgaseintrittsöffnung (58) umfasst.

7. Mischer nach Anspruch 4, 5 oder 6, **dadurch gekennzeichnet, dass** die Abgaseintrittsöffnungsanordnung (48) wenigstens eine zu dem Abgabekanal (34) führende Abgaseintrittsöffnung (62, 64) umfasst.

8. Mischer nach einem der vorangehenden Ansprüche, **dadurch gekennzeichnet, dass** eine Austrittsöffnungsanordnung (66) wenigstens eine aus dem Abgabekanal (34) heraus führende Austrittsöffnung (68, 70, 72, 74) umfasst.

9. Mischer nach Anspruch 8, **dadurch gekennzeichnet, dass** die Austrittsöffnungsanordnung (66) eine Haupt-Austrittsöffnung (68) umfasst, wobei der Abgabekanal (34) an einem stromabwärtigen Endbereich des Abgabekanals (34) über die Haupt-Austrittsöffnung (68) in Richtung einer Abgabekanal-Längsachse (L_{A}) offen ist.

10. Mischer nach Anspruch 8 oder 9, **dadurch gekennzeichnet, dass** die Austrittsöffnungsanordnung (66) im Erstreckungsbereich des Abgabekanals (34) wenigstens eine, vorzugsweise eine Mehrzahl von aus dem Abgabekanal (34) heraus führenden Neben-Austrittsöffnungen (70, 74) umfasst.

11. Mischer nach einem der vorangehenden Ansprüche, **dadurch gekennzeichnet, dass** im ersten Mischerkörperteil (28) ein erster Auswölbungsbereich (38) und im zweiten Mischerkörperteil (30) ein zweiter Auswölbungsbereich (40) gebildet sind, wobei der erste Auswölbungsbereich (38) und der zweite Auswölbungsbereich (40) im Wesentlichen den Reaktionsmittelaufnahmekanal (32) begrenzen, und dass im zweiten Mischerkörperteil (30) ein den Abgabekanal (34) begrenzender dritter Auswölbungsbereich (44) gebildet ist, vorzugsweise wobei der Übergangsbereich (42) eine zwischen dem zweiten Auswölbungsbereich (40) und dem dritten Auswölbungsbereich (44) am zweiten Mischerkörperteil (30) gebildete Einformung (45) umfasst.

12. Mischer nach einem der vorangehenden Ansprüche, **dadurch gekennzeichnet, dass** das erste Mischerkörperteil (28) und das zweite Mischerkörperteil (30) eine wenigstens Bereichsweise an eine Kreisform angenäherte Umfangskontur aufweisen, und dass eine Reaktionsmittelaufnahmekanal-Längsachse (L_{R}) und eine Abgabekanal-Längsachse (L_{A}) bezüglich eines Zentrumbereichs (Z) der Kreisform sich nicht radial erstrecken.

13. Mischer nach einem der vorangehenden Ansprüche, **dadurch gekennzeichnet, dass** das erste Mischerkörperteil (28) und das zweite Mischerkörperteil (30) in einem Außenumfangsbereich miteinander verbunden sind.

14. Abgasanlage für eine Brennkraftmaschine, umfassend einen Abgasführungskanal, einen Mischer (18) nach einem der vorangehenden Ansprüche und eine Reaktionsmitteleinspritzanordnung (20) zum Einspritzen von Reaktionsmittel (R) in den Reaktionsmittelaufnahmekanal (32) des Mischers (18).

15. Abgasanlage nach Anspruch 14, **dadurch gekennzeichnet, dass** die Reaktionsmitteleinspritzanordnung (20) sich in den Reaktionsmittelaufnahmekanal (32) erstreckend angeordnet ist.

## Claims

1. Mixer for mixing exhaust gas (A) flowing in an exhaust gas-carrying duct of an internal combustion engine with reactant (R) injected into the exhaust gas-carrying duct, comprising a mixer body (26) with a reactant-receiving duct (32) as well as a releasing device (36) with a releasing duct (34), which adjoins the reactant-receiving duct (32) in a transition area (42) and leads away from this reactant-receiving duct,
wherein the mixer body (26) comprises a plate-like first mixer body part (28) and a plate-like second mixer body part (30), wherein the reactant-receiving duct (32) and the releasing duct (34) are formed between the first mixer body part (28) and the second mixer body part (30), wherein the releasing device (36) has an asymmetric configuration in relation to a longitudinal axis (L_{R}) of the reactant-receiving duct, **characterized in that** the reactant-receiving duct (32) extends linearly along a longitudinal axis (L_{R}) of the reactant-receiving duct and the releasing duct (34) extends linearly along a longitudinal axis (L_{A}) of the releasing duct, and that an angle (W) smaller than 90° is formed between a longitudinal axis (L_{R}) of the reactant-receiving duct and a longitudinal axis (L_{A}) of the releasing duct.

2. Mixer in accordance with claim 1, **characterized in that** a single releasing duct (34) adjoins the reactant-receiving duct (32) in the transition area (42).

3. Mixer in accordance with claim 1 or 2, **characterized in that** an angle (W) in the range of 30° to 70° is formed between a longitudinal axis (L_{R}) of the reactant-receiving duct and a longitudinal axis (L_{A}) of the releasing duct.

4. Mixer in accordance with claim 1, 2 or 3, **characterized in that** an exhaust gas inlet opening device (48) comprises a plurality of exhaust gas inlet openings (50, 52, 54, 55, 56, 58, 60, 62, 64) leading to the reactant-receiving duct (32) or/and to the releasing duct (34).

5. Mixer in accordance with claim 4, **characterized in that** the exhaust gas inlet opening device (48) comprises at least one exhaust gas inlet opening (52, 54, 55), which is arranged in an upstream end area of the reactant-receiving duct (32) and is elongated in the direction of a longitudinal axis (L_{R}) of the reactant-receiving duct.

6. Mixer in accordance with claim 4 or 5, **characterized in that** the exhaust gas inlet opening device (48) comprises at least one exhaust gas inlet opening (58) leading to the transition area (42).

7. Mixer in accordance with claim 4, 5 or 6, **characterized in that** the exhaust gas inlet opening device (48) comprises at least one exhaust gas inlet opening (62, 64) leading to the releasing duct (34).

8. Mixer in accordance with one of the above claims, **characterized in that** a discharge opening device (66) comprises at least one discharge opening (68, 70, 72, 74) leading out of the releasing duct (34).

9. Mixer in accordance with claim 8, **characterized in that** the discharge opening device (66) comprises a main discharge opening (68), wherein the releasing duct (34) is open in the direction of a longitudinal axis (L_{A}) of the releasing duct via the main discharge opening (68) at a downstream end area of the releasing duct (34).

10. Mixer in accordance with claim 8 or 9, **characterized in that** in the area in which the releasing duct (34) extends, the discharge opening device (66) comprises at least one and preferably a plurality of auxiliary discharge openings (70, 74) leading out of the releasing duct (34).

11. Mixer in accordance with one of the preceding claims, **characterized in that** a first bulge area (38) is formed in the first mixer body part (28) and a second bulge area (40) is formed in the second mixer body part (30), wherein the first bulge area (38) and the second bulge area (40) essentially define the reactant-receiving duct (32), and that a third bulge area (44) defining the releasing duct (34) is formed in the second mixer body part (30), preferably wherein the transition area (42) comprises a recess (45) formed on the second mixer body part (30) between the second bulge area (40) and the third bulge area (44).

12. Mixer in accordance with one of the preceding claims, **characterized in that** the first mixer body part (28) and the second mixer body part (30) have a circumferential contour brought closer to a circular shape in at least some areas, and that a longitudinal axis (L_{R}) of the reactant-receiving duct and a longitudinal axis (L_{A}) of the releasing duct do not extend radially in relation to a central area (Z) of the circular shape.

13. Mixer in accordance with one of the preceding claims, **characterized in that** the first mixer body part (28) and the second mixer body part (30) are connected to one another in an outer circumferential area.

14. Exhaust system for an internal combustion engine, comprising an exhaust gas-carrying duct, a mixer (18) in accordance with one of the above claims and a reactant injection device (20) for injecting reactant (R) into the reactant-receiving duct (32) of the mixer (18).

15. Exhaust system in accordance with claim 14, **characterized in that** the reactant injection device (20) is arranged such that it extends into the reactant-receiving duct (32).

## Revendications

1. Mélangeur pour mélanger des gaz d'échappement (A) s'écoulant dans un conduit de transport de gaz d'échappement d'un moteur à combustion interne avec un réactif (R) injecté dans le conduit de transport de gaz d'échappement, comprenant un corps de mélangeur (26) avec un conduit de réception de réactif (32) ainsi qu'un dispositif de libération (36) avec un conduit de libération (34), qui se raccorde au conduit de réception de réactif (32) dans une zone de transition (42) et s'éloigne de ce conduit de réception de réactif,
dans lequel le corps de mélangeur (26) comprend une première partie de corps de mélangeur en forme de plaque (28) et une deuxième partie de corps de mélangeur en forme de plaque (30), dans lequel le conduit de réception de réactif (32) et le conduit de libération (34) sont formés entre la première partie de corps de mélangeur (28) et la deuxième partie de corps de mélangeur (30), dans lequel le dispositif de libération (36) a une configuration asymétrique par rapport à un axe longitudinal (L_{R}) du conduit de réception de réactif, **caractérisé en ce que** le conduit de réception de réactif (32) s'étend linéairement le long d'un axe longitudinal (L_{R}) du conduit de réception de réactif et le conduit de libération (34) s'étend linéairement le long d'un axe longitudinal (L_{A}) du conduit de libération, et **en ce qu'**un angle (W) inférieur à 90° est formé entre un axe longitudinal (L_{R}) du conduit de réception de réactif et un axe longitudinal (L_{A}) du conduit de libération.

2. Mélangeur selon la revendication 1, **caractérisé en ce qu'**un seul conduit de libération (34) est contigu au conduit de réception du réactif (32) dans la zone de transition (42).

3. Mélangeur selon la revendication 1 ou 2, **caractérisé en ce qu'**un angle (W) dans la gamme de 30° à 70° est formé entre un axe longitudinal (L_{R}) du conduit de réception du réactif et un axe longitudinal (L_{A}) du conduit de libération.

4. Mélangeur selon la revendication 1, 2 ou 3, **caractérisé en ce qu'**un dispositif d'ouverture d'entrée des gaz d'échappement (48) comprend une pluralité d'ouvertures d'entrée des gaz d'échappement (50, 52, 54, 55, 56, 58, 60, 62, 64) menant au conduit de réception de réactif (32) ou/et au conduit de libération (34).

5. Mélangeur selon la revendication 4, **caractérisé en ce que** le dispositif d'ouverture d'entrée des gaz d'échappement (48) comprend au moins une ouverture d'entrée des gaz d'échappement (52, 54, 55), qui est disposée dans une zone d'extrémité amont du conduit de réception du réactif (32) et qui est allongée dans la direction d'un axe longitudinal (L_{R}) du conduit de réception de réactif.

6. Mélangeur selon la revendication 4 ou 5, **caractérisé en ce que** le dispositif d'ouverture d'entrée des gaz d'échappement (48) comprend au moins une ouverture d'entrée des gaz d'échappement (58) menant à la zone de transition (42).

7. Mélangeur selon la revendication 4, 5 ou 6, **caractérisé en ce que** le dispositif d'ouverture d'entrée des gaz d'échappement (48) comprend au moins une ouverture d'entrée des gaz d'échappement (62, 64) menant au conduit de libération (34).

8. Mélangeur selon l'une des revendications précédentes, **caractérisé en ce qu'**un dispositif d'ouverture de décharge (66) comprend au moins une ouverture de décharge (68, 70, 72, 74) débouchant sur le conduit de libération (34).

9. Mélangeur selon la revendication 8, **caractérisé en ce que** le dispositif d'ouverture de décharge (66) comprend une ouverture de décharge principale (68), le conduit de libération (34) étant ouvert dans la direction d'un axe longitudinal (L_{A}) du conduit de libération via l'ouverture de décharge principale (68) au niveau d'une zone d'extrémité aval du conduit de libération (34).

10. Mélangeur selon la revendication 8 ou 9, **caractérisé en ce que** dans la zone dans laquelle s'étend le conduit de libération (34), le dispositif d'ouverture de décharge (66) comprend au moins une et de préférence une pluralité d'ouvertures de décharge auxiliaires (70, 74) menant hors du conduit de libération (34).

11. Mélangeur selon l'une des revendications précédentes, **caractérisé en ce qu'**une première zone de renflement (38) est formée dans la première partie de corps de mélangeur (28) et une deuxième zone de renflement (40) est formée dans la deuxième partie de corps de mélangeur (30), la première zone de renflement (38) et la deuxième zone de renflement (40) définissant essentiellement le conduit de réception de réactif (32), et qu'une troisième zone de renflement (44) définissant le conduit de libération (34) est formée dans la deuxième partie de corps de mélangeur (30), de préférence dans laquelle la zone de transition (42) comprend un évidement (45) formé sur la deuxième partie de corps de mélangeur (30) entre la deuxième zone de renflement (40) et la troisième zone de renflement (44).

12. Mélangeur selon l'une des revendications précédentes, **caractérisé en ce que** la première partie de corps de mélangeur (28) et la deuxième partie de corps de mélangeur (30) ont un contour circonférentiel rapproché d'une forme circulaire dans au moins certaines zones, et **en ce qu'**un axe longitudinal (L_{R}) du conduit de réception de réactif et un axe longitudinal (L_{A}) du conduit de libération ne s'étendent pas radialement par rapport à une zone centrale (Z) de la forme circulaire.

13. Mélangeur selon l'une des revendications précédentes, **caractérisé en ce que** la première partie de corps de mélangeur (28) et la deuxième partie de corps de mélangeur (30) sont reliées l'une à l'autre dans une zone circonférentielle extérieure.

14. Système d'échappement pour un moteur à combustion interne, comprenant un conduit de transport de gaz d'échappement, un mélangeur (18) selon l'une des revendications précédentes et un dispositif d'injection de réactif (20) pour injecter un réactif (R) dans le conduit de réception de réactif (32) du mélangeur (18).

15. Système d'échappement selon la revendication 14, **caractérisé en ce que** le dispositif d'injection de réactif (20) est disposé de manière à s'étendre dans le conduit de réception de réactif (32).
